# EUROPÄISCHE PATENTANMELDUNG

(11) **EP 2 166 055 A1**
(43) Veröffentlichungstag der Anmeldung: **24.03.2010**
(21) Anmeldenummer: 09169145.1
(22) Anmeldetag: 01.09.2009
(51) Int. Cl.: C09J 131/04, C09J 125/08, C09J 153/02, C09J 125/10

(54) **Schmelzhaftklebstoffe**

(30) Priorität: 11.09.2008 WO PCT/CN2008/072338
(71) Anmelder: LANXESS Deutschland GmbH, 51369 Leverkusen (DE)
(72) Erfinder: Hoch, Martin, 201203, Shanghai (CN); Herrmann, Michael, 50829, Köln (DE)

(57) **Zusammenfassung**

Bereitgestellt werden neue Schmelzhaftklebstoffe auf Basis spezieller Ethylen-VinylacetatCopolymere, Styrolblockcopolymere und eines klebrigmachenden Harzes. Diese Schmelzhaftklebstoffe eignen sich hervorragend zum Verkleben von Substraten, insbesondere zum Verkleben von Folien auf Substraten.

## Beschreibung

Die Erfindung betrifft Schmelzhaftklebstoffe sowie deren Herstellung und Verwendung.

Bei Schmelzhaftklebstoffen, die in der Fachwelt auch als "Hotmelts" bezeichnet werden, handelt es sich im allgemeinen um bei Raumtemperatur feste, Wasser- und lösungsmittelfreie Klebstoffe, die auf die zu verklebenden Teile bzw. Substrate aus der Schmelze aufgetragen werden und nach dem Zusammenfügen beim Abkühlen unter Verfestigung physikalisch abbinden. Diese Hotmelts sollen eine gute Haftung zu flexiblen Substraten aufweisen und eine optisch einwandfreie Verklebung von Kunststofffolien auf eine möglichst breite Palette von Substraten ermöglichen.

Es gibt jedoch auch Hotmelts, die selbst nach dem Abkühlen permanent klebrig und klebfähig bleiben. Diese Hotmelts haften bei leichtem Anpressdruck sofort auf fast allen Substraten und werden als "Pressure sensitive adhesives", abgekürzt auch als "psa" bezeichnet. Der Anwendungsbereich dieser Hotmelt-psa ist sehr breit und kann sowohl den Consumerbereich als auch die Industrie umfassen. Von Relevanz ist hierbei beispielsweise die Verpackungs- sowie die Getränkeindustrie zur Etikettierung, zum Anheften von Transporttaschen oder zum Befestigen von Wegwerfartikeln, wobei das Ziel sowohl in einer dauernden oder auch in einer zeitweiligen Befestigung bestehen kann.

Typische Hotmelts basieren auf Basis-Polymeren, klebrigmachenden Harzen, gegebenenfalls Weichmacher-Ölen und optional diversen Additiven. Sehr oft werden Styrol-Blockcopolymere, beispielsweise Styrol-lsopren-Styrol-Blockcopolymere ("SIS"), Styrol-Butadien-Styrol-Blockcopolymere ("SBS") und deren hydrierte Varianten (wie z.B. Styrol-Ethylen-Butylen-Styrol-("SEBS") und Styrol-Ethylen-Propylen-Styrol- ("SEPS") Blockopolymere), aber auch amorphe Poly-α-olefine (APAO) eingesetzt.

Zur Fertigung von Hotmelts mit ausgeprägten psa-Eigenschaften werden überwiegend Styrol-Isopren-Styrol (SIS) tri-block Copolymere verwendet, weil diese Formulierungen über einen breiten Temperaturbereich eingesetzt werden können. Diese SIS-basierten Hotmelt-psa verfügen über einen aggressiven Tack, d.h. bereits nach sehr kurzer Kontaktzeit wird eine hohe Klebekraft erreicht. Sie erlauben es ferner, hohe Schälkräfte und eine gute kohäsive Festigkeit einzustellen. SIS-basierte Formulierungen sind meistens klar, farblos und weisen nur einen geringen Geruch auf.

In jüngster Zeit haben Verfügbarkeitsprobleme bei Isopren-basierten Hotmelt-psa den Wunsch aufkommen lassen, alternativ auch SBS oder SEBS als Basis-Polymer einzusetzen. Es wurde beispielsweise vorgeschlagen, das SIS Basispolymer mit SIBS zu verdünnen bzw. zu strecken **(ASI Adhesives Sealant Industry, June 2005, M Peters).** Ferner wurden auch SIS Typen mit höherem Styrol Anteil, beispielsweise im Bereich von 40% anstelle von bisher üblicherweise 14 bis 20% untersucht, allerdings mit dem Ergebnis, dass weitere Formulierungsarbeit geleistet werden muss, damit das Endprodukt wieder die erforderlichen Eigenschaften besitzt.

Es ist ferner bekannt, dass sich beim Einsatz von SBS in Formulierungen für Hotmelt-psa die Schwierigkeit ergibt, eine geeignete Balance der adhäsiven und kohäsiven Eigenschaften in beschichteten Klebebändern oder Etiketten zu erreichen. **(C. Donker, RFP, 2/2006, 106).** Es wurde gefunden, dass nur 1:1 Blends aus SIS and SBS zufriedenstellende Ergebnisse liefern.

SEBS ist kein typisches Hotmelt-psa Polymer, weil dessen Klebrigkeit unbefriedigend ist. Anderseits ist es im Regelfall sehr wünschenswert, Polymere einzusetzen, die nur einen geringen Gehalt an Doppelbindungen aufweisen. Die aus den Doppelbindungen resultierenden Problem werden in US-A-6,723,407 sehr deutlich beschrieben: Die Nachteile derartiger Styrol-Blockcopolymere m i t ungesättigten Mittelblöcken bestehen in der geringen Alterungsstabilität, der geringeren Stabilität gegen UV-Strahlung, einer höheren Hitzealterung sowie Neigung zur Ozonolyse. Weiterhin lassen nennenswerte Doppelbindungsgehalte nur begrenzt hohe Verarbeitungstemperaturen und Verarbeitungszeiten zu. Absolut transparente Klebstoffe können auf diesem Weg ebenfalls nicht hergestellt werden, weil zwecks Erreichung des nötigen UV-Schutzes entsprechend schützende Pigmente wie TiO₂ oder Russ zugesetzt werden müssen.

Gesättigte Styrol-Blockcopolymere haben diese Begrenzung nicht, sie weisen jedoch in Formulierungen eine geringere Bindekraft auf. Oft ist es erforderlich, signifikante Mengen an Weichmacherölen einzusetzen, um die gewünschte Klebrigkeit zu erzielen. Dies hat den deutlichen Nachteil, das solche Weichmacheröle in die Substrate migrieren können und das Erscheinungsbild beispielsweise von Etiketten infolge einer Durchfeuchtung drastisch verschlechtert wird. Bei der Verklebung einer Folie auf festen Unterlagen kann die Weichmachermigration auch dazu führen, dass die Folien, z. B. in Form von Etiketten, nach einiger Zeit Falten oder Wellen aufwerfen.

Bei Einsatz von SEBS ist offensichtlich die Auswahl geeigneter klebrigmachender Harze, in der Fachwelt auch als "Tackifierharze" bezeichnet, sehr eingeschränkt. Ausgehend von den Betrachtungen von DuBois **(Adhesives & Sealants Council Meeting 2005)** zu den Hildebrandschen Lösungsparametern ist der bei SEBS vorhandene Mittelblock aus Ethylen- und Butylen-Wiederholungseinheiten wenig verträglich mit der wichtigen Gruppe der Rosinester.

WO-A-02/074873 beschreibt hotmelts-psa mit niedrigeren Doppelbindungsgehalten auf Basis von SEPS, die allerdings nur dadurch befriedigende Klebeeigenschaften erhalten, indem das SEPS mit SIS mischt. Da SEPS ein Hydrierungsprodukt von SIS ist, bleibt ferner die unerwünschte Abhängigkeit von Isopren-basierten Rohstoffen erhalten.

In der DE 10 2006 054196 werden ferner Schmelzhaftklebstoffe auf Basis von Styrolblockcopolymeren und Ethylen-Vinylacetat-Copolymeren mit einem Schmelzpunkt oberhalb von 70°C (gemessen mit DSC) beschrieben. Es wird ausgeführt, dass diese Ethylen-Vinylacetat-Copolymere kristallin oder teilkristallin sind. Neben den Styrolblockcopolymeren und den EVA Copolymeren muss der Schmelzhaftklebstoff als zusätzliche Komponenten zwingend ein klebrigmachendes Harz sowie relativ große Mengen an Weichmacher enthalten. In den Beispielen werden Mischungen aus SBS mit einem Ethylen-Vinylacetat-Copolymer "Evatan 28-05" mit 28 Gew.% Vinylacetat, Tackifierharz und wiederum hohen Mengen an Weichmacher beschrieben. Dieser hohe Weichmacheranteil ist wie oben bereits beschrieben unerwünscht. Doppelbindungsfreie Klebemischungen werden in der DE 10 2006 054196 überhaupt nicht beschrieben. In DE 10 2006 054196 wird als Vorteil hervorgehoben, dass die eingesetzten Styrolblockcopolymere und das EVA miteinander verträglich sind.

Somit bestand die **Aufgabe der vorliegenden Erfindung** darin, einen polymeren Zusatzstoff aufzufinden, der das Klebeniveau von Hotmelt-psa auf Styrol-Blockcopolymer- und insbesondere auf SEBS-Basis erhöht. Die Aufgabe bestand ferner darin, Schmelzhaftklebstoffe mit verbesserten Verarbeitungs- und Gebrauchseigenschaften bereitzustellen, die ein exzellentes Klebeniveau, eine sehr gute Haftung, eine hohe Alterungsresistenz und außerdem nur eine geringe Migrationsneigung aufweisen, so dass eine optisch einwandfreie Verklebung von Substraten und insbesondere von Folien auf verschiedensten Substraten möglich ist.

**Gegenstand der Erfindung** ist ein Schmelzhaftklebstoff zum Verkleben von Substraten enthaltend
a) 5 bis 70 phr, bevorzugt 10 bis 60 phr mindestens eines Ethylen-Vinylacetat-Copolymeren mit einem Vinylacetat-Gehalt im Bereich von 40 bis 90 Gew-%,
b) 95 bis 30 phr, bevorzugt 90 bis 40 phr mindestens eines Styrolblockcopolymeren und
c) 20 bis 200 phr, bevorzugt 25 bis 130 phr mindestens eines klebrigmachenden Harzes,
wobei phr die Gewichtsteile bezogen auf 100 Gewichtsteile Polymer darstellen.

Bezüglich der Angabe "phr" steht der Bezug "Polymer" im Rahmen dieser Anmeldung für die Summe aus den Komponenten a) und b).

Die erfindungsgemäßen Schmelzhaftklebstoffe zeichnen sich dadurch aus, dass es erstmals gelungen ist, Blends aus Styrol-Blockcopolymeren und Ethylenvinylacetat-Copolymeren mit hohem Vinylacetat-Gehalt einzusetzen. Die bisher im Stand der Technik nur zum Einsatz kommenden EVA Copolymere mit einem niedrigeren Vinylacetatgehalt und einem Schmelzpunkt oberhalb von 70°C führen ausweislich der Offenbarung in DE 10 2006 054196 zu Mischungen, die keinen echten psa-Charakter aufweisen, da sie beim Abkühlen zu einer festen Masse erstarren und nur im Heissrakelauftrag eingesetzt werden können, wodurch sich v.a. die praktische Handhabung aufwändiger gestaltet. Zudem ist bei Einsatz von Ethylen-Vinylacetat-Copolymeren mit niedrigem Vinylacetat-Gehalt der Einsatz relativ großer Weichmacher-Mengen erforderlich, was bei den erfindungsgemäßen Schmelzhaftklebstoffen nicht der Fall ist. Die erfindungsgemäßen Schmelzhaftklebstoffe besitzen das gewünschte sehr gute Klebeniveau, das üblicherweise in Form der Schälkraft im 90° oder 180° Peel-Versuch gemessen wird, und verfügen insbesondere über eine sehr gute Haftung auf polaren Substraten. Vor allem bei den SEBS-basierten Hotmelt-psa wird das Klebeniveau im erfindungsgemäßen Blend mit den Ethylenvinylacetat-Copolymeren gegenüber den bekannten SEBS basierten Hotmelt-psa erhöht, und es werden Klebstoffe erhalten, die eine hohe Alterungsresistenz und zudem nur eine geringe Migrationsneigung aufweisen, so dass optisch einwandfreie Verklebungen möglich sind. Auch die Anforderungen an die Wärmestandfestigkeit und Wiederablösbarkeit werden erfüllt. Ferner ist auch die Tieftemperaturflexibilität und damit das Tieftemperaturhaftvermögen der erfindungsgemäßen Schmelzhaftklebstoffe deutlich verbessert gegenüber Klebstoffen aus dem Stand der Technik wie sie z.B. durch Dr. Noel De Keyzer und Dr. Geert Vermunicht in einer Präsentation auf der AFERA 2004 (European Association for the Self Adhesive Tape Industry) beschrieben wurden.

Optional enthält der erfindungsgemäße Schmelzhaftklebstoff zusätzlich
d) bis zu 40 phr, bevorzugt 5 bis 20 phr
   mindestens eines paraffinischen, naphthenischen oder aromatischen Weichmacheröls oder Weichmacher vom Estertyp,
und ferner optional
e) bis zu 20 phr, bevorzugt bis zu 5 phr ein oder mehrerer weiterer Additive wie beispielsweise Alterungsschutzmittel, Farbstoffe oder Antistatikzusätze,
wobei wiederum phr die Gewichtsteile bezogen auf 100 Gewichtsteile Polymer darstellen.

Es ist weiterhin möglich Füllstoffe zuzusetzen, wobei an die Menge keine besonderen Anforderungen gestellt werden. Dem Fachmann ist bekannt, dass Füllstoffe in der Regel der Verbilligung dienen und die klebetechnischen Eigenschaften bei hohen Dosierungen deutlich verschlechtern.

### Komponente a): Ethylen-Vinylacetat Copolymere

Die im erfindungsgemäßen Schmelzhaftklebstoff eingesetzte Komponente a) in Form mindestens eines Ethylen-Vinylacetat-Copolymeren mit einem Vinylacetat-Gehalt im Bereich von 40 Gew.% bis zu 90 Gew-% bezogen auf die Summe der Monomeren ist dem Fachmann im Prinzip bekannt, wird auch als "EVM" abgekürzt und ist beispielsweise in Form der Produktpalette der Marke Levamelt^{®} von der Lanxess Deutschland GmbH kommerziell erhältlich. Bevorzugt eingesetzt werden können Ethylen-Vinylacetat-Copolymere mit einem Vinylacetat-Gehalt im Bereich von mehr als 40 Gew.% bis 90 Gew.%, besonders bevorzugt von 45 bis 90 Gew.%, besonders bevorzugt von 45 bis 85 Gew.% und insbesondere im Bereich von 50 bis 70 Gew.%, bezogen auf die Summe der Monomeren. Optional können neben Ethylen und Vinylacetat auch noch weitere Comonomere zur Herstellung der Komponente a) eingesetzt werden, wobei der zuvor beschriebene Vinylacetat-Gehalt weiterhin erfüllt sein muss. Die einzusetzenden Ethylen-Vinylacetat-Copolymere bzw. Terpolymere auf Basis von Ethylen, Vinylacetat und ein oder mehreren weiteren Monomeren sind üblicherweise entweder teilkristallin oder vollständig amorph. Im Falle von teilkristallinen Ethylen-Vinylacetat-Copolymeren weisen diese einen Schmelzpunkt von unter 60°C auf (gemessen mit DSC). Ab einem Vinylacetat-Gehalt von ca. 57 Gew.% wird in der Regel kein Schmelzpunkt mehr gefunden. Die reinen Copolymeren sind besonders klebrig, wenn der Vinylacetat-Gehalt zwischen 60 und 70 Gew.% liegt. Der MFI Wert (angegeben in der Einheit [g/10 min]; gemessen bei 190°C und 21,1 N) der Ethylen-Vinylacetat-Co- bzw. optional -Terpolymere liegt üblicherweise im Bereich von 0,5 bis 100, vorzugsweise im Bereich von 2 bis 50.

### Komponente b): Styrol-Blockcopolymer

Als weitere Komponente wird in der erfindungsgemäßen Mischung ein Styrol-Blockcopolymer eingesetzt. Hierbei kann es sich beispielsweise um Styrol- und Styrol-Butadien-Copolymere (SBS, SBR), Styrol-Isopren-Copolymere (SIS), Styrol-Ethylen/Butylen-Copolymere (SEBS), Styrol-Ethylen/Propylen-Styrol-Copolymere (SEPS) oder Styrol-Isopren-Butylen-Copolymere (SIBS) handeln. Derartige Produkte sind dem Fachmann bekannt und kommerziell erhältlich. Bevorzugt wird SEBS und SEPS eingesetzt. SEBS Styrolblockcopolymere sind beispielsweise unter den Markennamen Kraton^{®} G, Septon^{™} und Vector^{®} erhältlich.

Wird als Styrol-Blockcopolymer SEBS eingesetzt, so hat es sich bewährt, dass der Styrolgehalt im Bereich von 10 bis 50 Gew. % liegt und das Styrol-Blockcopolymer ferner zu mindestens 50 % hydriert sein.

Es ist ferner auch möglich, Gemische von SEBS oder SEPS mit SBS oder SIS einzusetzen, da diese in der Regel eine gute Mischbarkeit mit SEBS bzw. SEPS aufweisen.

Es hat sich bewährt, ein Styrolblockcopolymer einzusetzen, welches einen ganz oder teilweise hydrierten Mittelblock aufweist (z.B. SEBS, SEPS oder SIPS), und das optional in Kombination mit einem nicht hydrierten Styrolblockcopolymer (z.B. SBS, SIS) eingesetzt werden kann. Optimale Alterungsbeständigkeiten können erreicht werden, wenn dabei die hydrierten Styrolblockcopolymere überwiegen.

### Komponente c): Klebrigmachende Harze

In den erfindungsgemäßen Schmelzhaftklebstoffen wird mindestens ein klebrigmachendes Harz eingesetzt. Diese werden in der Fachwelt häufig auch als "Tackifierharze" bezeichnet. Sie können verschiedenste Zusammensetzungen besitzen und verleihen eine zusätzliche Klebewirkung. Geeignet sind beispielsweise: Rosinester-Harze basierend auf natürlichen Rohstoffen, d.h. sogenannte "gum rosins", ganz oder teil-hydrierte Rosinester-Harze, maleinisierte Derivate dieser Rosinesterharze, disproportionierte Derivate, Abietinester, modifizierte Naturharze wie Harzsäuren aus Balsamharz, Tallharz oder Wurzelharz, z.B. vollverseiftes Balsamharz, ggf. modifizierte Terpen-Harze, insbesondere Terpen-Co- oder Terpolymere wie Styrol-Terpene, α-Methyl-Styrol-Terpene, Phenol-modifizierte Terpen-Harze sowie hydrierte Derivate davon, sonstige Styrol-Harze, sonstige ggf. Phenol-modifizierte α-Methyl-Styrol-Harze, Acrylsäure-Copolymerisate, vorzugsweise Styrol-Acrylsäure-Copolymere, und aromatische, aliphatische oder cycloaliphatische Kohlenwasserstoffharze vom Typ C₅, C₉, C₉/C₁₀ sowie deren modifizierte oder hydrierte Derivate.

Die im erfindungsgemäßen Schmelzhaftklebstoff eingesetzten klebrigmachenden Harze besitzen üblicherweise einen Erweichungspunkt im Bereich von 60 bis 130 °C (gemessen nach der sogenannten Ring-Ball-Methode gemäß DIN 52011).

Als typische Handelsprodukte für **Rosinester** sind zu nennen:
- Sylvalite von Arizona Chemical wie Sylvalite RE 100, RE 104, RE 105, RE 115

Als typische Handelsprodukte für **hydrierte Rosinester** sind zu nennen:
- Foral^{®} von Eastman Chemical Company wie Foral^{®} 85-E, Foral^{®} 105-E
- Foralyn^{®} von Eastman Chemical Company wie Foralyn^{®} 90 und Foralyn^{®} 110
- Novares^{®} und Regalite^{®} für Kohlenwasserstoffharze vom C₅/C₉-Typ, Sylvares TP für Phenol-modifizierte Terpenharze.

Als typische Handelsprodukte für **C₉ basierte Kohlenwasserstoff-Harze** sind zu nennen:
- Kristalex^{®} von Eastman Chemical Company wie Kristalex^{®} F-100, Kristalex^{®} F-115, Kristalex^{®} F-85
- Regalite^{®} von Eastman Chemical Company wie Regalite^{®} R-1100, Regalite^{®} R-7100, Regalite^{®} 9100, Regalite^{®} R-5100

Als typische Handelsprodukte für **C₅ basierte Kohlenwasserstoff-Harze** sind zu nennen:
- Piccotac^{®} von Eastman Chemical Company wie Piccotac^{®} 1095-N, Piccotac^{®} 7590-N

Als typische Handelsprodukte für **C_{9/10} basierte Kohlenwasserstoff-Harze** sind zu nennen:
- Novares^{®} von Rütgers Chemicals AG wie Novares^{®} TM 90, Novares^{®} TNA 90, Novares^{®} TA 100, Novares^{®} TK 100, Novares^{®} TN 100, Novares^{®} TT 100, Novares^{®} TN 140

Als typische Handelsprodukte für **α-Methyl-Styrol-Harze** sind zu nennen:
- Sylvares SA 100 und Salvares SA 140 von Arizona Chemical
- Syvlares 600 als Phenol-modifiziertes α -Methyl-Styrol-Harz von Arizona Chemical

Als typische Handelsprodukte für **Terpen-Harze** sind zu nennen:
- Sylvares TP 105 und TR 1100 von Arizona Chemical
- Sylvares TP 300 und Sylvares TP 2040 als Phenol-modifiziertes Terpen-Harz von Arizona Chemical

In den erfindungsgemäßen Schmelzhaftklebstoffen werden vorzugsweise Harze eingesetzt, die den Styrol-Endblock nicht erweichen, also eine höhere Kompatibilität zum Mittelblock des Styrol-Blockcopolymeren bzw. zum Ethylen-Vinylacetat-Copolymeren aufweisen. Es hat sich herausgestellt, dass auf diese Weise der Styrolblock unverändert als Hartkomponente erhalten bleibt und solche Harze zum Wärmestand, d.h. dem Erhalt einer gewissen Festigkeit bzw. einem Widerstand gegen Fließen bei erhöhten Temperaturen, beitragen.

Das oder die klebrigmachenden Harze wird/werden in einer Menge von 20 bis 200 phr eingesetzt, bevorzugt sind Dosierungen von 25 bis 130 phr. Phr bedeutet auch hier wieder Gewichtsteile bezogen auf 100 Gewichtsteile Polymer.

Es hat sich bewährt, in dem erfindungsgemäßen Schmelzhaftklebstoff ein bei Raumtemperatur flüssiges Tackifierharz mit bis zu 40 phr, bevorzugt mit 5 bis 30 phr, einzusetzen und zwar entweder alleine oder aber in Kombination mit einem oder mehreren weiteren Tackifierharzen, wobei für die Gesamtmenge an Tackifierharz der bereits genannte Bereich von 20 bis 200 phr einzuhalten ist.

Weiterhin ist es möglich als Komponente c) aromatische, aliphatische oder cycloaliphatische Kohlenwasserstoff-Harze einzusetzen oder deren modifizierte oder hydrierte Varianten.

### Optionale Komponente(n) d)

Neben den essentiellen Komponenten a), b) und c) können optional Weichmacher als Komponenten d) eingesetzt werden, die die Viskosität erniedrigen, die Verarbeitbarkeit zusätzlich vereinfachen und ggf. die Klebrigkeit erhöhen. Geeignet sind hier Alkylester aliphatischer oder aromatischer Carbonsäuren, wie Adipate, Sebacate, Phthalate, Citrate, Benzoate, Mellitate und aromatische Sulfonate. Die Menge dieser Weichmacher sollte so gewählt werden, dass eine Migration in die zu verklebenden Substrate nicht stattfindet. Dies kann auch vermieden werden, indem die Gewichte der eingesetzten Weichmacher nicht zu klein gewählt werden. Es können auch Polyalkylenglykole wie Polypropylenglykol oder Polybutylenglykol verwendet werden.

In einer weiteren Ausführungsform der vorliegenden Erfindung wird dem erfindungsgemäßen Schmelzhaftklebstoff mindestens einen mineralöl-basierter Weichmacher in einer Menge von bis zu 20 phr hinzugefügt.

### Optionale Komponente(n) e)

Optional können dem Schmelzhaftklebstoff Wachse in geringen Mengen zugegeben werden, jedoch nur in einer solchen Menge, dass die Klebrigkeit bei Raumtemperatur nicht negativ beeinflusst wird.

Den erfindungsgemäßen Schmelzhaftklebstoffen können ferner dem Fachmann bekannte Stabilisatoren und Antioxidantien hinzugefügt werden. Dies ist +jedoch nicht zwingend, denn ein wichtiger Vorteil der erfindungsgemäßem Mischungen besteht darin, dass entweder niedrige Doppelbindungsgehalte eingestellt werden können, oder aber sogar ganz auf den Einsatz von doppelbindungshaltigen Polymeren verzichtet werden kann. Dies ermöglicht die Minimierung des Einsatzes von Antioxidantien bis hin zum kompletten Wegfall. Weitere denkbare Einsatzstoffe sind dem Fachmann bekannt wie beispielsweise Füllstoffe zwecks Verbilligung der Schmelzhaftklebstoffe, Farbpigmente und Haftvermittler.

**Gegenstand der vorliegenden Erfindung** ist ferner ein Verfahren zur Herstellung der erfindungsgemäßen Schmelzhaftklebstoffe, indem man die Komponenten a), b) und c) sowie optional d) und e) miteinander mischt. Hierfür können dem Fachmann bekannte Misch-Verfahren zum Einsatz gelangen.

Die Mischung der Komponenten zu einer homogenen Schmelze erfolgt üblicherweise in einem Temperaturbereich von 140 bis 190°C.

Die Herstellung der erfindungsgemäßen Schmelzhaftklebstoffe kann dabei sowohl diskontinuierlich, z.B. in einem Z-blade-Mixer, oder aber auch kontinuierlich, z.B. in einem Extruder, insbesondere einem 2-Schneckenextruder erfolgen.

**Gegenstand der vorliegenden Erfindung** ist ferner die Verwendung der erfindungsgemäßen Schmelzhaftklebstoffe zum Verkleben von Substraten.

Die erfindungsgemäßen Schmelzhaftklebstoffe können dabei zum Verkleben eines breiten Spektrums unterschiedlicher Substrate verwendet werden. Derartige Substrate sind üblicherweise fest. Sie können flexibel oder alternativ starr sein. Bevorzugt ist eines der zu verklebenden Substrate dünn und flexibel, insbesondere in Form von Folien, Mehrschichtfolien, Papier oder Mehrschichtaufbauten aus Papier und Polymerfilmen. Hierbei handelt es sich beispielsweise um Etiketten, Umverpackungen oder Taschen. Diese können beispielsweise aus Kunststoffen wie Polyethylen, Polypropylen, Polystyrol oder Polyvinylchlorid hergestellt sein. Etiketten können aber auch auf Papier basieren, gegebenenfalls in Kombination mit Polymerfilmen. Insbesondere wenn es sich um Substrate auf Basis eines Polyolefins handelt, kann die Klebekraft so eingestellt werden, dass eine Wiederablösung und Wiederbeklebung möglich ist.

Als zweites Substrat, das durch die erfindungsgemäßen Schmelzhaftklebstoffe mit dem ersten Substrat verklebt wird, sind beispielsweise Glas, Metall, lackierte oder unlackierte Oberflächen, gestrichenes oder unbehandeltes Papier, Kartonagen, Thermoplasten, bevorzugt aus Polycarbonat, Polyester, PVC, Polystyrol, SAN, AB S, Polypropylen (PP), Polyethylen oder EVA (Ethylen-Vinylacetat-Copolymeren mit einem Vinylacetat-Gehalt von größer 0 bis kleiner 40 Gew.%) geeignet.

Besonders bevorzugt ist auch die Verwendung der erfindungsgemäßen Schmelzhaftklebstoffe zum reversiblen Verkleben zweier dünner flexibler Substrate. Hierdurch können beispielsweise Taschen aus Folie wiederverschließbar verklebt werden.

Gegenstand der Erfindung sind ferner die verklebten, bevorzugt reversibel verklebten Substrate enthaltend den erfindungsgemäßen Schmelzhaftklebstoff.

### BEISPIELE

In den nachfolgenden Beispielen wurden die folgenden Substanzen eingesetzt:

### Levamelt^{®} 600 (Komponente a)

Ethylen-Vinylacetat Copolymer mit einem Vinylacetat-Gehalt von 60 Gew.%; Lanxess Deutschland GmbH

### Kraton^{®} G 1657 (Komponente b)

SEBS Polymer mit einem Styrol-Gehalt von 13% und einem Melt Flow Index von 8 g/10 min (200°C, 50 N); Kraton Polymers

### Kraton^{®} D 1161 (Komponente b)

SIS Polymer mit einem Styrol-Gehalt von 15 % und einem Melt Flow Index von 12 g/10 min (200°C, 50 N); Kraton Polymers

### Rosinester Foral^{®} 85 E (Komponente c)

Hydrierter Rosinester mit einem R&B Wert von 85°C; Arizona Chemical

### Fluessiges Rosinester Harz RL-1 (Komponente c)

Deqing Yinlong Industrial Co.,Ltd, P R China

### Kristallex^{™} F-85 (Komponente c)

C₉ Kohlenwasserstoff-Harz; Eastman Chemical Company

### Irganox^{®} 1010 (Komponente e)

Stabilisator; Ciba Geigy

### Sunpar^{®} 2280 (Komponente e)

Paraffinöl, hergestellt von Sunoco, erhältlich beispielsweise über Natrochem, Inc.

### Herstellung der Mischungen:

Die nachfolgend für die einzelnen Beispiele angegebenen Rezepturbestandteile wurden bei 170°C und 180 U/ min in einem Mini-Mischer (DSM Midi-Mixer mit 15 ml Arbeitsvolumen, Doppelschneckenextruder) in 5 Minuten aufgeschmolzen und gemischt. Die Mischung wurde anschließend über eine Düse abgelassen und auf Silikonpaper abgekühlt.

An den erhaltenen Schmelzhaftklebstoffen wurden die folgende Untersuchungen durchgeführt:

### 1. DMA Messung

Es wurde eine Gerät vom Typ DMA/SDTA861e von Mettler-Toledo mit einem Doppelsandwichprobenhalter verwendet. Die DMS Messungen wurden jeweils bei einer Frequenz von 1, 10 und 100 Hz durchgeführt bei einer Heizrate von 1 K/min und mit einer maximalen Deformationsamplitude von 0.1%.

Die Ergebnisse für die Bespiele der vorliegenden Anmeldung sind in den nachfolgenden Tabellen 1 und 2 sowie in den Diagrammen 1 bis 3 sowie 5 bis 9 dargestellt.

### 2. Peeltest

Die Klebemischung gemäß den Beispielen 1 bis 4 wurde auf eine PET-Folie als Rückenfolie aufgetragen mit einer Schichtdicke von ca. 50 µm, entsprechend einem Auftragsgewicht von 50g/m². Die Verklebung der so beschichteten PET Folie mit dem jeweiligen Substrat in Form eines V2A-Stahlblechs oder einer Polycarbonat-Platte erfolgte in einem Folienlaminator bei 100°C für eine Dauer von 3 sec. Die Schälkraft wurde anschließend nach einer 24 stündigen Lagerung unter Standardbedingungen, d.h. bei Raumtemperatur (entsprechend 22°C +/- 2 °C) durch einen Peeltest nach der FINAT-Testmethode Nr.1 bestimmt. Im Rahmen dieses Tests erfolgte eine Klebkraft-Prüfung im 180° Schälversuch bei einer Abzugsgeschwindigkeit von 300 mm/min mit einem Teststreifen der Dimension 25 mm x 200 mm. Es wurden jeweils drei Versuche pro Schmelzhaftklebstoff durchgeführt. Die Ergebnisse dieser drei Versuche sind für jedes Beispiel in der nachfolgenden Tabelle 1 dargestellt.

### Beispiel 1-4: SEBS als Styrolblockcopolymer

### Beispiel 1:

Es wurde eine Mischung hergestellt aus:

| | |
|---|---|
| 2.79 g | EVM Polymer (Levamelt^{®} 600) |
| 4.18 g | SEBS-Polymer (Kraton^{®} G 1657) |
| 6.69 g | Harz (Rosinester Foral^{®} 85 E) |
| 0.07 g | Stabilisator (Irganox^{®} 1010) |

### Beispiel 2 (Vergleich):

Es wurde eine Mischung hergestellt aus:

| | |
|---|---|
| 6.97 g | SEBS-Polymer (Kraton^{®} G 1657) |
| 6.69 g | Harz (Rosinester Foral^{®} 85 E) |
| 0.07 g | Stabilisator (Irganox^{®} 1010) |

### Beispiel 3:

Es wurde eine Mischung hergestellt aus:

| | |
|---|---|
| 2.46 g | EVM Polymer (Levamelt^{®} 600) |
| 3.70 g | SEBS-Polymer (Kraton^{®} G 1657) |
| 6.16 g | Harz (Rosinester Foral^{®} 85 E) |
| 0.62 g | flüssiges Rosinesterharz (RL-1) |
| 0.07 g | Stabilisator (Irganox^{®} 1010) |

### Beispiel 4:

Es wurde eine Mischung hergestellt aus:

| | |
|---|---|
| 2.15 g | EVM Polymer (Levamelt^{®} 600) |
| 3.22 g | SEBS-Polymer (Kraton^{®} G 1657) |
| 5.7 g | Harz (Rosinester Foral^{®} 85 E) |
| 0.07 g | Stabilisator (Irganox^{®} 1010) |
| 2.15 g | Paraffinöl (Sunpar^{®} 2280) |

**Tabelle 1: Ergebnisse der DMA Untersuchungen sowie des Peeltests für die Beispiele 1 bis 4**

| **Beispiel** | **1** **(erfindungsgemäß)** | **2** **(Vergleich)** | **3** **(erfindungsgemäß)** | **4** **(erfindungsgemäß)** |
|---|---|---|---|---|
| **Peeltest*** | | | | |
| **V2A Stahl** | 52.37/58.87/54.58 | 33.8/41.6/41.2 | 53.6/52.6/56.1 | 25.9/21.8/25.8 |
| **Polycarbonat** | 54.3/58.3/60.8 | 48.1/44.4/46.6 | 56.8/55.6/49.1 | 29.0/29.8/28.7 |

| **DMA Untersuchungen** | | | | |
|---|---|---|---|---|
| **DMA bei 1 Hz** | zwei Phasen bei -18°C und +13°C | eine Phase bei +13°C | zwei Phasen bei -20°C und +10°C | zwei Phasen bei -10°C und +10°C (schwächer ausgeprägt) |

| | | | | |
|---|---|---|---|---|
| * Bei den für den Peeltest angegebenen Messwerten handelt es sich um die Peelkräfte mit der Einheit [N/25 mm] | | | | |

### Diagramme 1-3:

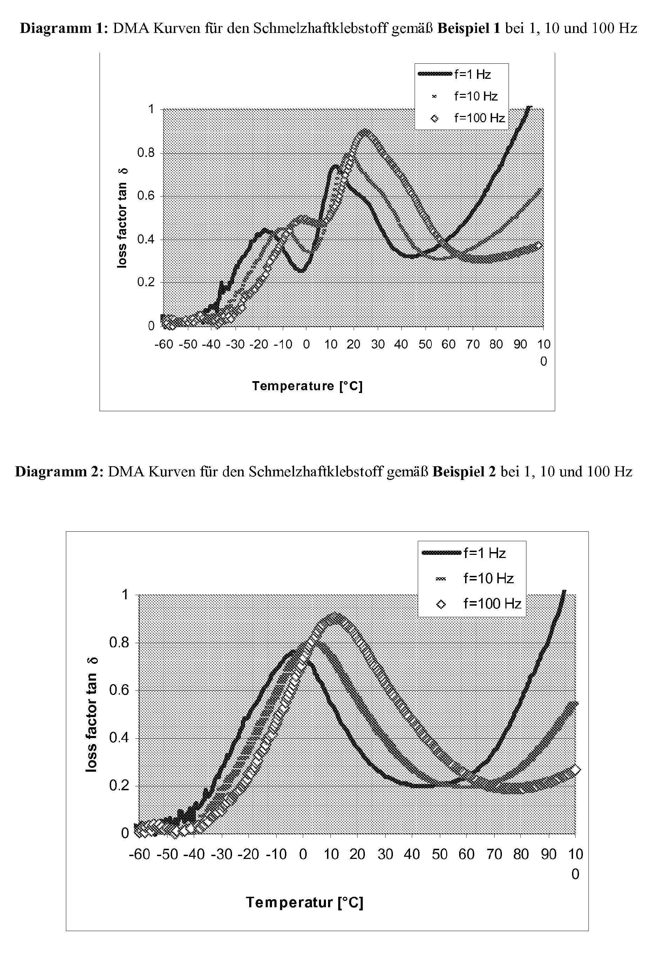

Die Diagramme 1-3 zeigen die DMA Kurven für die Schmelzhaftklebstoff gemäß **Beispiel 1, 2** und **3** jeweils bei einer Frequenz von 1, 10 und 100 Hz als Auftragung des Verlustfaktors tanδ in Abhängigkeit von der Temperatur.

Überraschenderweise zeigt sich, dass die erfindungsgemäße Formulierung aus SEBS und EVM eine ausgeprägte 2-Phasigkeit aufweist. Obwohl die Glasübergangstemperatur Tg von reinem SEBS mit -45°C (DMA, 2 Hz, Carvagno et al, Präsentation auf der PSTC, 16.-18. Mai 2007, Orlando, Florida, U.S.A.) unterhalb der des eingesetzten EVM (Tg bei ca. -20°C) liegt, erscheint im Blend mit EVM eine Tieftemperaturphase in der Nähe von -18°C und eine Phase bei +13°C, die durch den Vergleichsversuch 2 als "EB"-Mittelblockphase des SEBS identifiziert werden kann.

Glassübergangsbereiche werden üblicherweise mit dem Temperaturbereich der Klebrigkeit in Verbindung gebracht. Glassübergangsbereiche nahe Raumtemperatur sind eindeutig günstig für Klebeanwendungen bei Raumtemperatur oder leicht erhöhter Temperatur. Bei angestrebten Anwendungen in der Kälte wie z.B. Etiketten für Kaltverpackungen sollten die Schmelzhaftklebstoffe Glassübergangsbereiche unterhalb von 0°C aufweisen. Dies kann gemäß dem Stand der Technik beispielsweise erreicht werden durch Mischungen von SIS mit Tackifier-Harzen, die eine Kompatibilität zum SIS Mittelblock aufweisen. Allerdings ist dann die kohäsive Klebekraft bei Raumtemperatur wenig ausgeprägt und die Verwendbarkeit somit eingeschränkt. Im Unterschied dazu sind die erfindungsgemäßen Schmelzhaftklebstoffe sowohl bei Raumtemperatur als auch bei tiefen Temperaturen einsetzbar.

Beispiele 3 und 4 zeigen, dass die Zweiphasigkeit bei Zusatz flüssiger Harze oder Weichmacher erhalten bleibt, allerdings bei Einsatz paraffinischer Öle wie in Beispiel 4 etwas weniger ausgeprägt ist. Bewährt haben sich daher besonders Schmelzhaftklebstoffe, bei denen unpolare Öle im Höchstfall in sehr geringen Mengen eingesetzt werden. Flüssige Harze, insbesondere vom Rosinestertyp verschieben die Glassübergangsbereiche der beiden Phasen zu tieferen Temperaturen und sind daher ein Mittel die Klebrigkeit bei niedrigeren Temperaturen zu erhöhen.

### Beispiele 5-9: SIS als Styrolblockcopolymer

### Beispiel 5: (Vergleich)

Es wurde eine Mischung hergestellt aus:

| | |
|---|---|
| 100 phr | EVM Polymer (Levamelt^{®} 600) |
| 33,33 phr | Kristallex^{™} F-85 |

### Beispiel 6: (Vergleich)

Es wurde eine Mischung hergestellt aus:

| | |
|---|---|
| 100 phr | Kraton^{®} D 1161 |
| 33,33 phr | Kristallex^{™} F-85 |

### Beispiel 7: (erfindungsgemäß)

Es wurde eine Mischung hergestellt aus:

| | |
|---|---|
| 25 phr | EVM Polymer (Levamelt^{®} 600) |
| 75 phr | Kraton^{®} D 1161 |
| 33,33 phr | Kristallex^{™} F-85 |

### Beispiel 8: (erfindungsgemäß)

Es wurde eine Mischung hergestellt aus:

| | |
|---|---|
| 50 phr | EVM Polymer (Levamelt^{®} 600) |
| 50 phr | Kraton^{®} D 1161 |
| 33,33 phr | Kristallex^{™} F-85 |

### Beispiel 9: (erfindungsgemäß)

Es wurde eine Mischung hergestellt aus:

| | |
|---|---|
| 75 phr | EVM Polymer (Levamelt^{®} 600) |
| 25 phr | Kraton^{®} D 1161 |
| 33,33 phr | Kristallex^{™} F-85 |

Die Herstellung der Mischungen gemäß den Beispielen 5 bis 9 erfolgte durch Mischung der Komponenten in einer Kneterkammer bei 90°C für einen Zeitraum von ca 5 Minuten.

An den so erhaltenen Schmelzhaftklebstoffen der Beispiele 5-9 wurden die für die Beispiele 1-4 bereits geschilderten DMA Untersuchungen sowie der Peeltest durchgeführt. Die DMA Untersuchung wurde ausschließlich bei einer Frequenz von 1 Hz durchgeführt. Beim Peeltest erfolgte die Laminierung auf Stahl bzw. Polycarbonat bei 80°C. Alle übrigen Messparameter waren unverändert.

Die Ergebnisse sind in der nachfolgenden Tabelle 2 dargestellt. Die Ergebnisse der DMA Messungen finden sich ferner in den Diagrammen 5-9.

**Tabelle 2: Ergebnisse der DMA Untersuchungen sowie des Peeltests für Beispiele 5 bis 9**

| **Beispiel** | **5 (Vergleich)** | **6 (Vergleich)** | **7 (erfindungsgemäß)** | **8 (erfindungsgemäß)** | **9 (erfindungsgemäß)** |
|---|---|---|---|---|---|
| **Peeltest*** | | | | | |
| **V2A Stahl** | 29.1 | 12.8 | 25.2 | 23.5 | 23.6 |
| **Polycarbonat** | 57.7 | 22.3 | 40.1 | 31.2 | 37.2 |

| **DMA Untersuchung** | | | | | |
|---|---|---|---|---|---|
| **DMA bei 1 Hz** | eine Phase bei-6°C | eine Phase bei-43,5°C | zwei Phasen bei-47°C und +2°C | zwei Phasen bei-50,2°C und -2,2°C | zwei Phasen bei-51,7°C und -3,9°C |

| | | | | | |
|---|---|---|---|---|---|
| * Bei den für den Peeltest angegebenen Messwerten handelt es sich um die Peelkräfte mit der Einheit [N/25 mm] | | | | | |

### Diagramme 5-9:

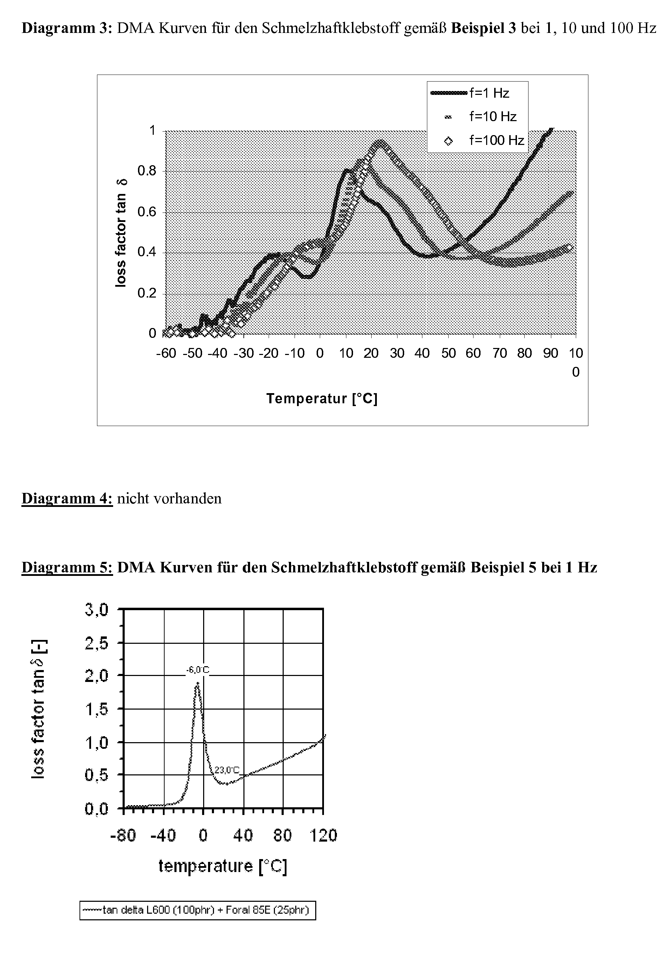

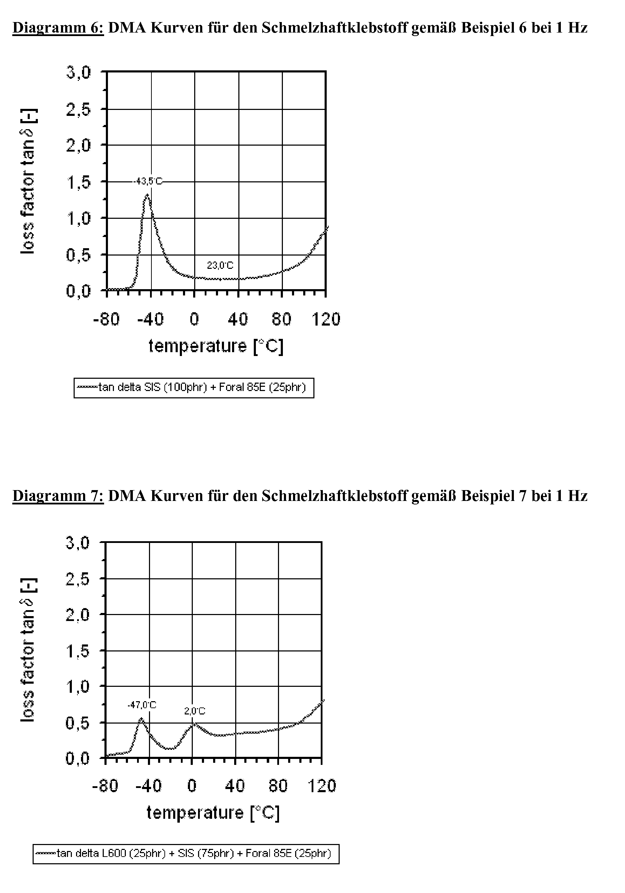

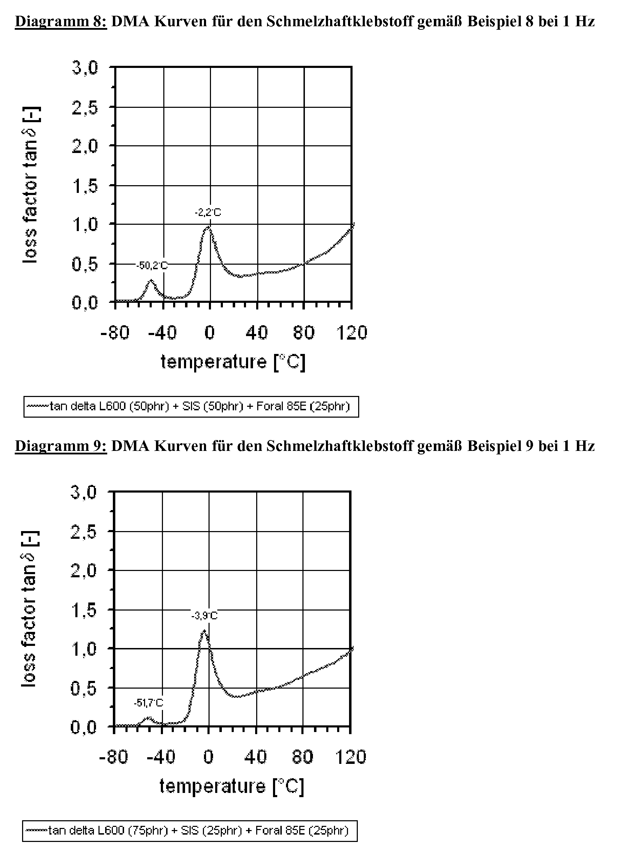

Die Diagramme 5-9 zeigen die DMA Kurven für die Schmelzhaftklebstoff gemäß **Beispiele 5-9** jeweils bei einer Frequenz von 1 Hz als Auftragung des Verlustfaktors tanδ in Abhängigkeit von der Temperatur.

Anhand der erfindungsgemäßen Beispiele 7 bis 9 zeigt sich überraschenderweise, dass sich bei Herstellung eines erfindungsgemäßen Schmelzhaftklebstoffs auf Basis von SIS und EVM (Levamelt^{®} 600) erneut ein zweiphasiges System ausbildet. Dies ist umso erstaunlicher, als bei den beiden Vergleichsbeispielen 5 und 6 zu erkennen ist, dass das eingesetzte Tackifier-Harz offensichtlich mit beiden Komponenten SIS und EVM kompatibel ist, somit also der Schluss nahegelegen hätte, dass beim Blenden beider Komponenten nur eine Phase in der DMA Messung erhalten würde.

## Patentansprüche

1. Schmelzhaftklebstoff zum Verkleben von Substraten, enthaltend
a) 5 bis 70 phr, bevorzugt 10 bis 60 phr mindestens eines Ethylen-Vinylacetat-Copolymeren mit einem Vinylacetat-Gehalt im Bereich von 40 bis 90 Gew-%,
b) 95 bis 30 phr, bevorzugt 90 bis 40 phr mindestens eines Styrolblockcopolymeren und
c) 20 bis 200 phr, bevorzugt 25 bis 130 phr mindestens eines klebrigmachenden Harzes,
wobei phr die Gewichtsteile bezogen auf 100 Gewichtsteile Polymer darstellen.

2. Schmelzhaftklebstoff zum Verkleben von Substraten nach Anspruch 1, wobei als Komponente a) mindestens ein Ethylen-Vinylacetat-Copolymer mit einem Vinylacetat-Gehalt von mehr als 40 Gew.% bis 90 Gew.%, bevorzugt im Bereich von 45 bis 90 Gew.%, besonders bevorzugt im Bereich von 45 bis 85 Gew.% und insbesondere im Bereich von 50 bis 70 Gew.% eingesetzt wird.

3. Schmelzhaftklebstoff zum Verkleben von Substraten nach Anspruch 1 oder 2 zusätzlich enthaltend
d) bis zu 40 phr, bevorzugt 5 bis 20 phr mindestens eines paraffinischen, naphthenischen oder aromatischen Weichmacheröls oder Weichmachers vom Estertyp, und
e) bis zu 20 phr, bevorzugt bis zu 5 phr ein oder mehrerer weiterer Additive ausgewählt aus der Gruppe bestehend aus Alterungsschutzmitteln, Farbstoffen oder Antistatikzusätzen,
wobei phr die Gewichtsteile bezogen auf 100 Gewichtsteile Polymer darstellen.

4. Schmelzhaftklebstoff zum Verkleben von Substraten nach einem oder mehreren der Ansprüche 1 bis 3 enthaltend als Komponente b) mindestens ein Styrol- und Styrol-Butadien-Copolymer (SBS, SBR), Styrol-Isopren-Copolymer (SIS), Styrol-Ethylen/ Butylen-Copolymer (SEBS), Styrol-Ethylen/Propylen-Styrol-Copolymer (SEPS) oder Styrol-Isopren-Butylen-Copolymer (SIBS).

5. Schmelzhaftklebstoff zum Verkleben von Substraten nach einem oder mehreren der Ansprüche 1 bis 3 enthaltend als Komponente b) mindestens SEBS, welches einen Styrolgehalt im Bereich von 10 bis 50 Gew. % besitzt und in dem mindestens 50 % der im ursprünglichen Blockcopolymer vorliegenden C=C-Doppelbindungen hydriert sind.

6. Schmelzhaftklebstoff zum Verkleben von Substraten nach einem oder mehreren der Ansprüche 1 bis 3 enthaltend als Komponente b) ein Gemisch von SEBS oder SEPS mit SBS oder SIS.

7. Schmelzhaftklebstoff zum Verkleben von Substraten nach einem oder mehreren der Ansprüche 1 bis 6 enthaltend als Komponente c) Rosinester-Harze basierend auf natürlichen Rohstoffen, ganz oder teil-hydrierte Rosinester-Harze, maleinisierte Derivate dieser Rosinesterharze, disproportionierte Derivate, Abietinester, modifizierte Naturharze wie Harzsäuren aus Balsamharz, Tallharz oder Wurzelharz, inbesondere vollverseiftes Balsamharz, gegegebenenfalls modifizierte Terpen-Harze, insbesondere Terpen-Co- oder Terpolymere bevorzugt Styrol-Terpene, α-Methyl-Styrol-Terpene, Phenol-modifizierte Terpen-Harze sowie hydrierte Derivate davon, weitere Styrol-Harze, sonstige ggf. Phenol-modifizierte α-Methyl-Styrol-Harze, Acrylsäure-Copolymerisate, vorzugsweise Styrol-Acrylsäure-Copolymere, und aromatische, aliphatische oder cycloaliphatische Kohlenwasserstoffharze vom Typ C₅, C₉, C₉/C₁₀ sowie deren modifizierte oder hydrierte Derivate.

8. Schmelzhaftklebstoff zum Verkleben von Substraten nach einem oder mehreren der Ansprüche 1 bis 7 enthaltend als Komponente c) mindestens ein klebrigmachendes Harze mit einem Erweichungspunkt im Bereich von 60 bis 130 °C (gemessen nach der sogenannten Ring-Ball-Methode gemäß DIN 52011).

9. Schmelzhaftklebstoff zum Verkleben von Substraten nach einem oder mehreren der Ansprüche 3 bis 8 enthaltend als Komponente d) mindestens einen Alkylester aliphatischer oder aromatischer Carbonsäuren, bevorzugt Adipate, Sebacate, Phthalate, Citrate, Benzoate, Mellitate, aromatische Sulfonate, Polyalkylenglykole, bevorzugt Polypropylenglykol oder Polybutylenglykol, oder mindestens einen mineralöl-basierter Weichmacher.

10. Verfahren zur Herstellung der Schmelzhaftklebstoffe nach einem oder mehreren der Ansprüche 1 bis 9, wobei die Komponenten a), b) und c) und gegebenenfalls d) und e) in einem Temperaturbereich im Bereich von 140 bis 190°C miteinander gemischt werden.

11. Verwendung der Schmelzhaftklebstoffe nach einem oder mehreren der Ansprüche 1 bis 9 zum Verkleben von Substraten.

12. Verwendung der Schmelzhaftklebstoffe nach Anspruch 11, wobei eines der zu verklebenden Substrate dünn und flexibel ist und bevorzugt eine Folie, Mehrschichtfolie, Papier oder einen Mehrschichtaufbau aus Papier und Polymerfilm(en) darstellt.

13. Verwendung der Schmelzhaftklebstoffe nach Anspruch 11 oder 12, wobei eines der zu verklebenden Substrate ausgewählt ist aus der Gruppe bestehend aus Metall, lackierten und unlackierten Oberflächen, gestrichenem oder unbehandeltem Papier, Kartonagen, Thermoplasten, bevorzugt aus Polycarbonat, Polyester, PVC, Polystyrol, SAN, ABS, Polypropylen (PP), Polyethylen oder EVA (Ethylen-Vinylacetat-Copolymeren mit einem Vinylacetat-Gehalt von größer 0 bis kleiner 40 Gew.%). geeignet. Möglich ist aber auch ein Verkleben von zwei flexiblen Foliensubstraten.

14. Verwendung der Schmelzhaftklebstoffe nach Anspruch 11 oder 12, wobei zwei Substrate reversibel miteinander verklebt werden, bevorzugt in Form von zwei dünnen flexiblen Substraten.

15. Verklebte, bevorzugt reversibel verklebte Substrate enthaltend einen Schmelzhaftklebstoff nach einem oder mehreren der Ansprüche 1 bis 9.
